# EUROPEAN PATENT APPLICATION

(11) **EP 4 718 813 A1**
(43) Date of publication of application: **01.04.2026**
(21) Application number: 24835267.6
(22) Date of filing: 26.06.2024
(51) Int. Cl.: H04L 49/111

(54) **SWITCH, SWITCH CABINET, AND DATA EXCHANGE METHOD**

(30) Priority: 04.07.2023 CN 202310814632
(71) Applicant: Huawei Technologies Co., Ltd., Shenzhen, Guangdong 518129 (CN)
(72) Inventor: MING, Xiaoyong, Shenzhen, Guangdong 518129 (CN); PENG, Xiaopeng, Shenzhen, Guangdong 518129 (CN); LI, Jun, Shenzhen, Guangdong 518129 (CN); LIU, Guoding, Shenzhen, Guangdong 518129 (CN)
(74) Representative: Isarpatent
(86) International application number: PCT/CN2024/101703
(87) International publication number: WO 2025/007786

(57) **Abstract**

This application provides a switch, a switch cabinet, and a data switching method. The switch specifically includes at least two interface modules, a switching module, and an ingress processing module. The at least two interface modules include a first interface and a second interface. The first interface is configured to: send and receive a first packet that is based on a first protocol, and the second interface is configured to: send and receive a second packet that is based on a second protocol. The interface module is configured to obtain a to-be-forwarded packet, where the to-be-forwarded packet is one of the first packet and the second packet. The ingress processing module is configured to: receive the to-be-forwarded packet from the interface module, and obtain first indication information corresponding to the to-be-forwarded packet, where the first indication information indicates a destination interface corresponding to the to-be-forwarded packet. The switching module is configured to: receive the to-be-forwarded packet and the first indication information from the ingress processing module, and send the to-be-forwarded packet to the corresponding destination interface based on the first indication information.

## Description

This application claims priority to Chinese Patent Application No. 202310814632.0, filed with the China National Intellectual Property Administration on July 4, 2023 and entitled "SWITCH, SWITCH CABINET, AND DATA SWITCHING METHOD", which is incorporated herein by reference in its entirety.

### TECHNICAL FIELD

Embodiments of this application relate to the field of electronic information, and in particular, to a switch, a switch cabinet, and a data switching method.

### BACKGROUND

With popularization of cloud computing and high-performance computing, more applications and data are migrated to data centers. Services and an amount of data processed by the data centers grow explosively, and requirements on computing power of the data centers are increasingly high. However, due to limitations of Moore's Law (Moore's Law) and slowdown in processor performance growth, a domain specific architecture (Domain Specific Architecture, DSA) gradually becomes a trend, and more heterogeneous processors/accelerators are introduced into the data centers. In addition, based on a memory wall (Memory Wall), both a capacity and a bandwidth of a memory of a single server become bottlenecks for performance of a high-performance processor. Therefore, a disaggregated data center (Disaggregated Data Center) is promoted. To be specific, key resources such as a heterogeneous processor, an accelerator, and a memory are pooled, to meet continuously growing computing power and memory requirements. In this architecture, a communication delay and a transmission bandwidth between different types of resources limit performance of the high-performance processor.

### SUMMARY

This application provides a switch, a switch cabinet, and a data switching method, to optimize networking in the switch cabinet and improve resource utilization in the cabinet.

According to a first aspect, this application provides a switch, specifically including at least two interface modules, a switching module, and an ingress processing module. The at least two interface modules include a first interface and a second interface. The first interface is configured to: send and receive a first packet that is based on a first protocol, and the second interface is configured to: send and receive a second packet that is based on a second protocol. The interface module is configured to obtain a to-be-forwarded packet, where the to-be-forwarded packet is one of the first packet and the second packet. The ingress processing module is configured to: receive the to-be-forwarded packet from the interface module, and obtain first indication information corresponding to the to-be-forwarded packet, where the first indication information indicates a destination interface corresponding to the to-be-forwarded packet. The switching module is configured to: receive the to-be-forwarded packet and the first indication information from the ingress processing module, and send the to-be-forwarded packet to the destination interface based on the first indication information.

A plurality of interfaces supporting different protocols, the ingress processing module supporting switching of at least one protocol, and a switching module supporting different protocols are configured for the switch, to receive, process, switch, and forward packets of a plurality of different protocols, so as to reduce costs and power consumption of a switch device. In addition, local resources (such as a memory, a hard disk, and an accelerator) that are originally configured in a server and that overflow may be configured outside a cabinet as pooled resources, and data transmission is implemented through a bus and a ToR switch that supports switching of a plurality of protocols. This further reduces system costs and power consumption, and also removes a limitation that the local resources are used by only the server, thereby improving resource utilization, implementing flexible resource configuration, and implementing a plurality of new services.

In an implementation, the switch further includes an egress processing module, configured to: receive the to-be-forwarded packet and the first indication information from the switching module, and send the to-be-forwarded packet to the interface module. The interface module includes the destination interface.

In an implementation, the ingress processing module in the switch is configured to connect to at least two interfaces, where the at least two interfaces include the first interface and the second interface. The ingress processing module is enabled to work in different protocols, to reduce a quantity of ingress processing modules that are necessary in the switch, so as to reduce system costs and power consumption.

In an implementation, the egress processing module in the switch is configured to connect to at least two interfaces, where the at least two interfaces include the first interface and the second interface. The egress processing module is enabled to work in different protocols, to reduce a quantity of egress processing modules that are necessary in the switch, so as to reduce system costs and power consumption.

According to a second aspect of this application, a switch is provided, and includes at least two interface modules, a first switching module, an ingress processing module, and a multi-protocol conversion module. The at least two interface modules include a first interface and a second interface. The first interface is configured to: send and receive a first packet that is based on a first protocol, and the second interface is configured to: send and receive a second packet that is based on a second protocol. The interface module is configured to obtain a to-be-forwarded packet, where the to-be-forwarded packet is one of the first packet and the second packet. The multi-protocol conversion module is configured to: receive the to-be-forwarded packet, and convert the to-be-forwarded packet into a third packet based on a configuration, where the third packet and the to-be-forwarded packet are packets based on different protocols. The first switching module is configured to: receive the third packet and corresponding indication information, and send the received third packet to the destination interface based on the indication information. The indication information is generated by the ingress processing module and indicates the destination interface corresponding to the received packet, and the ingress processing module is configured to obtain the indication information corresponding to the received packet.

A plurality of interfaces supporting different protocols, an ingress processing module supporting switching of at least one protocol, a switching module supporting one protocol, and a multi-protocol conversion module used for protocol conversion are configured for the switch, to implement conversion between intra-cabinet protocols and inter-cabinet different protocols, and cancel deployment of a multi-protocol conversion module on each server, so as to reduce system costs and power consumption. In addition, a new networking manner in the cabinet can be updated through the switch, so that the server can access a plurality of pooled resources in the cabinet by using only one bus protocol, including but not limited to a memory, a hard disk, and an accelerator. This further reduces system interconnection costs and power consumption.

In an implementation, the interface module in the switch is connected to the ingress processing module, and the ingress processing module is connected to the multi-protocol conversion module.

In an implementation, the interface module in the switch is connected to the multi-protocol conversion module, and the multi-protocol conversion module is connected to the ingress processing module.

In an implementation, the switch further includes a second switching module. The interface module is connected to the ingress processing module, the ingress processing module is connected to the second switching module, and the second switching module is connected to the multi-protocol conversion module.

In an implementation, the switch further includes an egress processing module, configured to: receive the to-be-forwarded packet and the first indication information from the switching module, and send the to-be-forwarded packet to the interface module. The interface module includes the destination interface.

According to a third aspect of this application, a switch cabinet is provided, and includes the switch according to the first aspect, at least one server electrically connected to the switch, and at least one resource pool electrically connected to the switch. The resource pool includes at least one of a plurality of memory resources, a plurality of hard disk resources, and a plurality of accelerator resources.

In an implementation, the switch cabinet further includes a multi-protocol conversion apparatus, and the multi-protocol conversion apparatus is electrically connected to the switch.

According to a fourth aspect of this application, a switch cabinet is provided, and includes the switch according to the second aspect, at least one server electrically connected to the switch, and at least one resource pool electrically connected to the switch. The resource pool includes at least one of a plurality of memory resources, a plurality of hard disk resources, and a plurality of accelerator resources.

### BRIEF DESCRIPTION OF DRAWINGS

FIG. 1 is a diagram of an architecture of a cabinet according to an embodiment of this application;
FIG. 2 is a diagram of an architecture of a cabinet in which some resources are shared according to an embodiment of this application;
FIG. 3 is a diagram of an architecture of a cabinet according to an embodiment of this application;
FIG. 4 is a diagram of an architecture of a switch according to an embodiment of this application;
FIG. 5 is a flowchart of packet processing by a switch according to an embodiment of this application;
FIG. 6 is a diagram of an architecture of another switch according to an embodiment of this application;
FIG. 7 is a diagram of an architecture of another switch according to an embodiment of this application; and
FIG. 8 is a diagram of an architecture of another switch according to an embodiment of this application.

### DESCRIPTION OF EMBODIMENTS

To make the objectives, technical solutions, and advantages of this application clearer, the following clearly and completely describes the technical solutions in this application with reference to the accompanying drawings in this application. It is clear that the described embodiments are a part rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, the terms "first", "second", and the like are merely intended for distinguishing and description, and shall not be understood as indicating or implying relative importance, or indicating or implying a sequence. Moreover, the terms "include", "have", and any other variant thereof are intended to cover a non-exclusive inclusion, for example, including a series of steps or units. For example, a method, system, product, or device is not necessarily limited to those steps or units expressly listed, but may include other steps or units not expressly listed or inherent to such a process, method, product, or device.

It should be understood that in this application, "at least one piece (item)" refers to one or more and "a plurality of" refers to two or more. The term "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" generally indicates an "or" relationship between the associated objects. The expression "at least one of the following items (pieces)" or a similar expression means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

Rapid development of technologies such as cloud computing, big data, and artificial intelligence poses higher requirements on data center networks that carry data traffic. Requirements of services on the data center networks include high throughput, high reliability, low latency, and adaptation to server virtualization. To meet network requirements of services, more enterprises choose to build their own data centers or rent public clouds to carry increasing service traffic. A modern data center is equipped with a physical rack in which at least one physical server is mounted. Each physical server is deployed with at least a central processing unit (Central Processing Unit, CPU), and is further deployed with localized resources, including a memory, a solid-state drive (solid-state drive, SSD), an accelerator (for example, including a GPU), a network interface card, and the like.

Because a scale of a current data center is increased, a plurality of physical racks may be placed in a cabinet, and physical servers in the plurality of physical racks may implement connection and communication through switches. Based on deployment locations of the switches in the cabinet (which may also be understood as different access manners of a server), a physical architecture of the switches is generally classified into two types: TOR (Top of Rack) and EOR (End of Row)/MOR (Middle of Row).

TOR (Top of Rack) means that one or two switches are deployed in each server cabinet, and a server is directly connected to a switch in the cabinet to implement interconnection between the server and the switch in the cabinet. Generally, deploying switches on the top of the cabinet facilitates cabling. Therefore, this architecture is most widely used.

In contrast, the EOR (End of Row) architecture provides a unified network access point at the end of each row of cabinets. The MOR (Middle of Row) architecture is an improvement of the EOR architecture, and also provides a unified network access cabinet for a server. However, the MOR architecture requires placing the network cabinet in the middle of an entire row of cabinets. This shortens a distance between a server cabinet and the network cabinet to some extent, and simplifies cable management and maintenance.

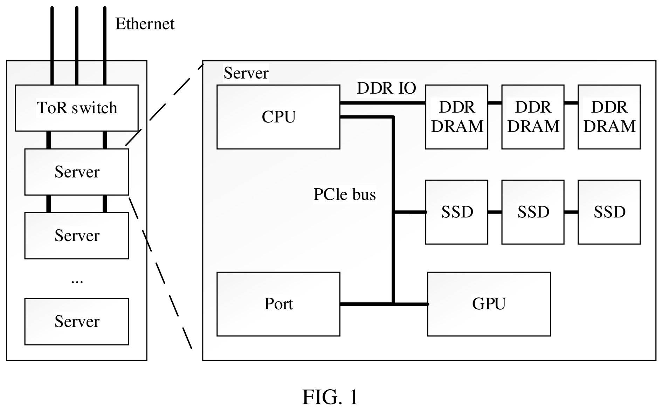

FIG. 1 provides a common architecture of a cabinet. The cabinet includes a plurality of servers and at least one ToR switch inside. A CPU and a local resource deployed on each server are used by only the server and cannot be shared. The plurality of servers may be connected to the ToR switch according to an Ethernet (Ethernet) protocol. Further, the ToR switch may be connected to a spine (Spine) switch through an Ethernet interface, to establish a data center network and meet a larger scale requirement.

Each server in FIG. 1 is generally configured with at least one CPU, a memory (for example, a DDR DRAM), an SSD, and an accelerator GPU. External data may be transmitted from the switch to the server through the Ethernet interface, and further transmitted to different localized resources through an internal bus and different interfaces of the server for processing or storage. For example, the Ethernet interface may be connected to the CPU, the GPU, and the SSD through a peripheral component interconnect express (Peripheral Component Interconnect Express, PCIe) bus. When performing data processing, the CPU stores data in the memory through a DDR I/O interface.

Because a ratio of a computing capability to a localized resource in a physical server is fixed during delivery or configuration of the physical server, resources may be configured based on a maximum capacity of a related service preset during delivery or configuration. Therefore, not only a resource waste may occur, but also when a new service proposes a larger capacity requirement, a single server cannot provide sufficient resources to meet the requirement of the new service. New services include a remote dictionary server (Remote Dictionary Server, Redis), a database, artificial intelligence (artificial intelligence, AI) computing, and the like. These new services usually have higher requirements on a memory capacity and a hard disk capacity.

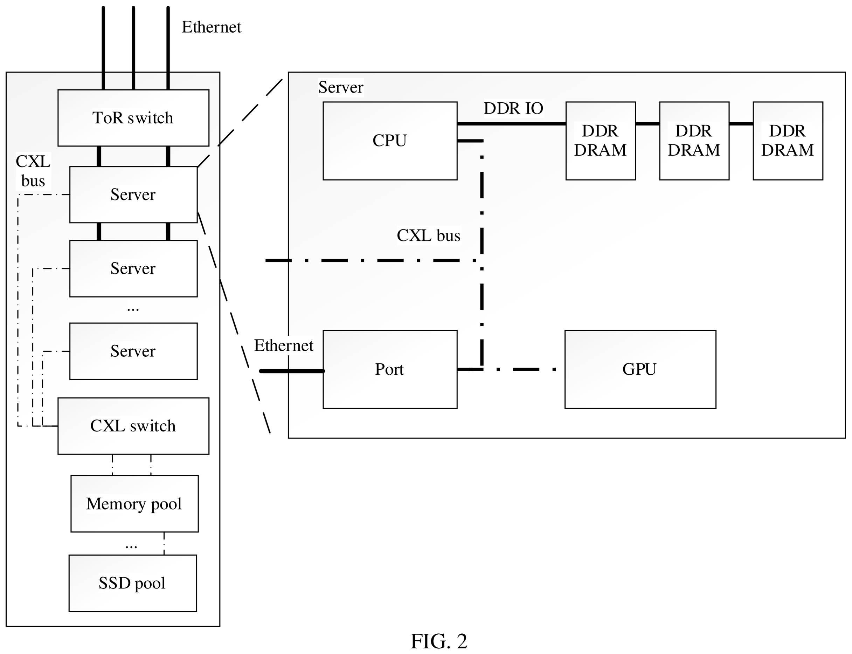

Based on the foregoing service requirement change, the problem may be resolved by adding an interface to the server and implementing resource pooling in the cabinet. FIG. 2 shows an architecture of a cabinet in which some resources are shared. The cabinet includes a plurality of servers, at least one ToR switch, at least one resource switch, a memory pool, and an SSD pool inside. The memory pool and the SSD pool in the cabinet are shared by all the servers in the cabinet.

The ToR switch implements communication between the plurality of servers, and may be connected to a spine (Spine) switch through an Ethernet interface, to establish a data center network and meet a larger scale requirement.

The resource switch implements data exchange between the server and the memory pool or the SSD pool by supporting communication protocols such as compute express link (Compute Express Link, CXL) or unified buffer (unified buffer, UB).

Each server is configured with an Ethernet interface to implement communication with the ToR switch, and is further configured with at least one interface to implement data transmission with the resource switch according to the communication protocols such as CXL or UB. In addition, a CPU and some local resources such as a GPU, a network interface card, and a local DRAM are deployed in the server. The local DRAM and the memory pool in the cabinet may form a memory structure with different tiers (Tier). These local resources are used by only the server and cannot be shared.

With development of an internet, data explosion occurs, and virtualization technologies develop. Cloud computing and high-performance computing become more popular. As a result, greater challenges are posed to computing power of data centers, and further optimization is required for a layout and resources in an existing cabinet. Therefore, a new switch architecture is urgently needed to improve resource utilization in the cabinet, optimize an operation and switching rate, and meet an evolving service requirement.

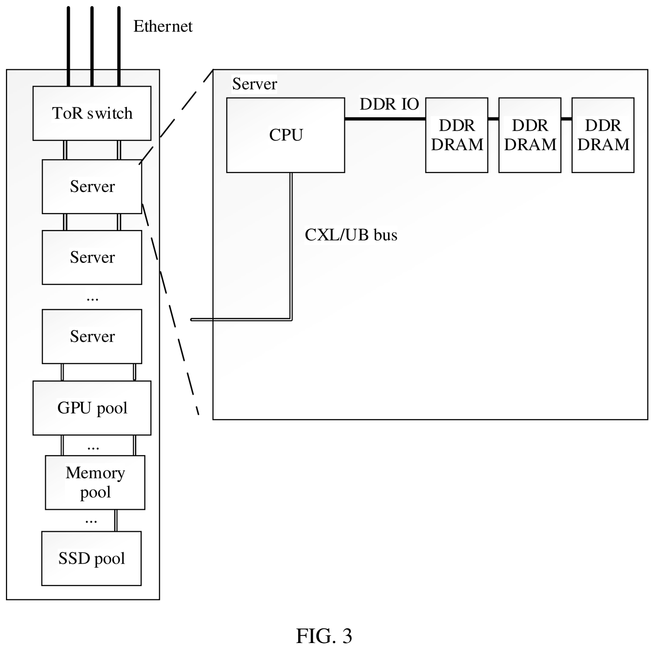

FIG. 3 provides an architecture of a cabinet. A plurality of servers, at least one switch, and a plurality of resource pools are disposed in the cabinet. The plurality of resource pools include but are not limited to a memory pool (for example, a DDR DRAM pool), a hard disk pool (for example, an SSD pool), an accelerator pool (for example, a GPU pool), and a network interface card. The switch may be a ToR switch, an EoR switch, or an MoR switch, and is used for intra-cabinet communication and data communication between a cabinet and the outside of the cabinet. The following uses the ToR switch as an example.

The ToR switch is configured with an internal switching interface, and the internal switching interface supports an internal data interconnection protocol, for example, including a CXL protocol and a UB protocol. Through the internal switching interface, the ToR switch interconnects the servers in the cabinet with various resource pools, so that the memory pool, the hard disk pool, the accelerator pool, the network interface card, and the like are shared by all the servers in the cabinet.

A relationship between a service requirement and an upper limit of a configured resource capacity of a server at delivery or configuration is decoupled by pooling and centralizing local resource pools originally in the server to resource pools in a rack, and enabling the ToR switch to connect the server to the resource pools, to improve resource utilization and meet flexible configuration of computing resources for various services. In addition, due to transfer of the local resource in the server, a type of CPU bus interconnection in the server can be reduced, to reduce system costs and power consumption.

Further, the ToR switch is further configured with a standard Ethernet interface, and may be connected to a spine (Spine) switch outside the cabinet through the standard Ethernet interface, to establish a data center network and meet a larger scale requirement.

The server in the cabinet is also configured with an internal switching interface, and the internal switching interface supports an internal data interconnection protocol, for example, including a CXL protocol and a UB protocol. In addition, the server further includes a CPU, and is connected to the ToR switch through the internal switching interface.

Optionally, a memory resource is further configured inside the server, and a two-layer memory architecture is implemented by using a local memory resource and a shared memory pool in the rack, to balance performance and a capacity, so that a service that requires a large memory can be resolved at low costs.

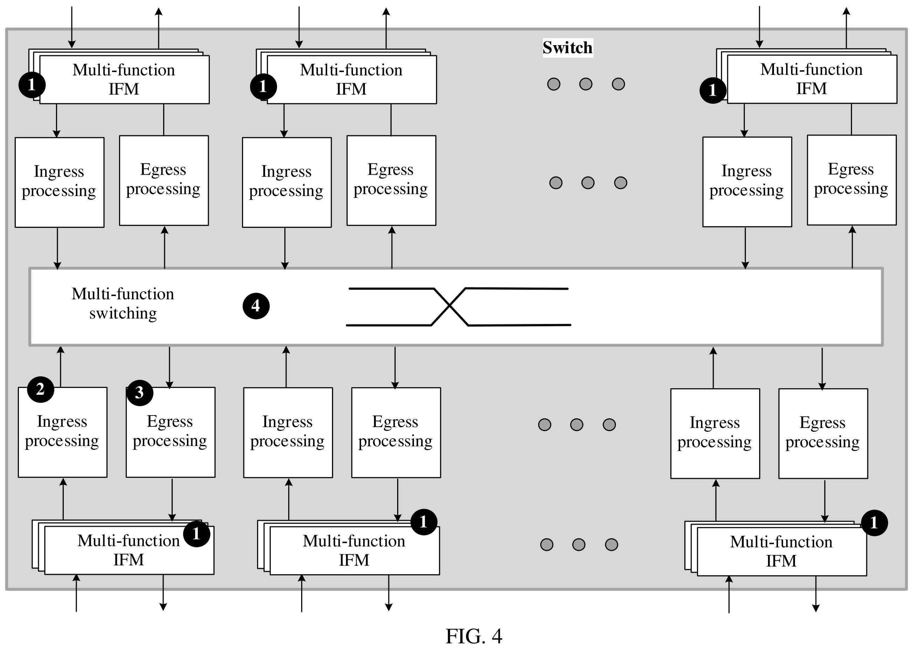

To implement the foregoing rack structure, FIG. 4 provides an architecture of a ToR switch, which includes a multi-function interface module, an ingress processing unit, an egress processing unit, and a multi-protocol switching unit. The multi-function interface module is connected to at least one ingress processing unit and one downlink packet processing unit, and the multi-protocol switching unit is connected to all ingress processing units and egress processing units.

The multi-function interface module is also referred to as a multi-function integrated facility management (multi-function integrated facility management, MIFM) module. The multi-function interface module includes a media access control (Media Access Control, MAC) layer, a physical coding sublayer (physical coding sublayer, PCS), and a physical layer (physical, PHY), and supports at least one intra-rack data interconnection protocol, including but not limited to a standard Ethernet protocol, a standard CXL protocol, a standard UB protocol, or another bus protocol. The multi-function interface module may support a plurality of data interconnection protocols. After configuration is completed, the multi-function interface module works in one of the plurality of data interconnection protocols. In other words, one multi-function interface module receives and/or sends packets that are based on a same protocol at the same time. For example, a first MIFM module may be configured to work in the standard Ethernet protocol, and may be connected to a spine switch outside the cabinet. A second MIFM module may be configured to work in the standard CXL protocol, and may be connected to the server in the cabinet. Data switching in the memory pool is based on the standard CXL protocol.

Each multi-function interface module is connected to one ingress processing module and one egress processing module.

An ingress processing (Ingress Processing, IP) module is connected to at least one multi-function interface module, is used for processing, specifically including but is not limited to processing such as data aggregation, parsing, table lookup, route selection, editing and forwarding, on an uplink packet from the multi-function interface module, and supports at least one intra-rack data forwarding protocol, including but not limited to the standard Ethernet protocol (specifically including a standard Ethernet layer 2/layer 3 forwarding protocol and standard Ethernet tunnel processing), the standard CXL protocol, the standard UB protocol, or another bus protocol. Preferably, the ingress processing module may support a plurality of data forwarding protocols, and may support forwarding of packets a plurality of protocols at the same time. When the IP module is connected to two or more MIFM modules, the two or more MIFM modules may be configured to work in different data interconnection protocols. Therefore, the IP module may receive and/or send packets of a plurality of protocols at the same time.

An egress processing (Egress Processing, EP) module is connected to at least one multi-function interface module, is used for processing, specifically including but is not limited to processing such as data parsing, table lookup, encapsulation, editing, and distribution, on a downlink packet from the multifunction interface module, and supports at least one intra-rack data forwarding protocol, including but not limited to the standard Ethernet protocol (specifically including the standard Ethernet layer 2/layer 3 forwarding protocol and standard Ethernet tunnel processing), the standard CXL protocol, the standard UB protocol, or another bus protocol. Similar to the ingress processing module, the egress processing module may also support a plurality of data forwarding protocols, that is, support forwarding of packets a plurality of protocols at the same time.

The multi-protocol switching (Multi-protocol Switching, MFS) module is connected to all the ingress processing modules and egress processing modules, and performs switching processing, including but not limited to operations such as data buffering, switching, enqueue, scheduling, and quality of service (Quality of Service, QoS) management, on the packets the plurality of protocols from the ingress processing module. The plurality of supported protocols include but are not limited to a standard Ethernet protocol (specifically including a standard Ethernet layer 2/layer 3 switching protocol and standard Ethernet tunnel switching), a standard CXL protocol, a standard UB protocol, or another bus protocol. Similar to the ingress processing module, the MFS module also supports switching of packets a plurality of protocols at the same time.

The ToR switch is configured with a plurality of interfaces that support different protocols (for example, a first interface that is in the MIFM module and that supports the standard Ethernet protocol and a second interface in the MIFM module and that supports the standard CXL protocol), an ingress processing module, an egress processing module, and a multi-protocol switching module that support switching of a plurality of types of protocols. Therefore, the ToR switch can receive, process, switch, and forward packets of a plurality of different protocols, without requiring at least two switches that separately support communication of different protocols. This reduces costs and power consumption of a switch device. The server in the cabinet can not only receive and send conventional packet data based on the standard Ethernet protocol, but also store, in a pooled resource in the cabinet, packet data based on the standard CXL protocol or the standard UB protocol. In addition, local resources (such as a memory, a hard disk, and an accelerator) that are originally configured in a server and that overflow may be configured outside a cabinet as pooled resources, and data transmission is implemented through a bus and a ToR switch that supports switching of a plurality of protocols. This further reduces system costs and power consumption, and also removes a limitation that the local resources are used by only the server, thereby improving resource utilization, implementing flexible resource configuration, and implementing a plurality of new services.

Optionally, the ToR switch may be further connected to a multi-protocol converter, for example, a network interface card, configured to implement fast protocol conversion of a packet, for example, convert a packet based on the standard Ethernet protocol into a packet based on the standard CXL protocol, to improve packet switching efficiency and expand a storage acceleration service.

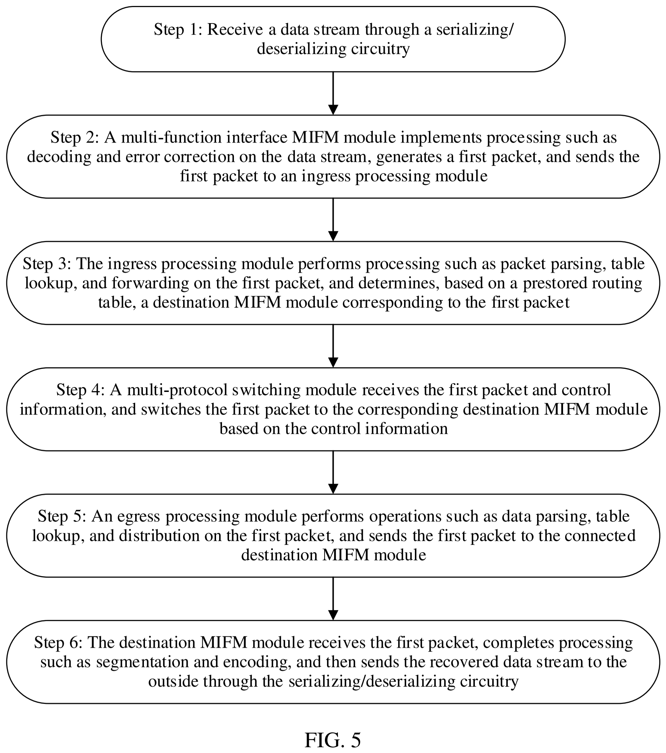

FIG. 5 provides a packet processing procedure of the ToR switch in FIG. 4.

Step 1: Receive a data stream through a serializing/deserializing circuitry (serializing/deserializing circuitry, SerDes).

The data stream is a data stream based on a first protocol, and the first protocol is one of a plurality of protocols supported by the multi-function interface module and the multi-protocol switching module in the ToR switch. The ToR switch is connected to the server or a local pooled resource, including but is not limited to a memory pool, a storage pool, an accelerator pool, and the like, in the cabinet through the SerDes.

For example, the ToR switch receives a data stream from the server in the cabinet, and needs to store the data in an SSD pool. The data stream may be a data stream based on a standard CXL protocol.

Step 2: The multi-function interface module receives the data stream, generates a first packet, and sends the first packet to the ingress processing module.

Specifically, operations performed by the MIFM module on the data stream include decoding, error correction, framing, error check, retransmission, and the like. For example, when the MIFM module is configured to work in a standard CXL mode, the first packet is a standard CXL packet.

Step 3: The ingress processing module receives the first packet, and forwards the first packet and control information to the multi-protocol switching module.

Specifically, the IP module performs operations including packet parsing, table lookup, forwarding, editing, and the like on the first packet, and determines, based on a prestored routing table, a destination MIFM module corresponding to the first packet, and information related to the destination MIFM module is carried in the control information.

For example, when the first packet is a standard CXL packet, the IP module works in a standard CXL mode, to process the first packet.

In a possible implementation, the IP module is connected to a plurality of MIFM modules, and switches a working mode based on a received packet, to process packets of different protocols.

Step 4: The multi-protocol switching module receives the first packet and the control information, and switches the first packet to the corresponding destination MIFM module based on the control information.

In a possible implementation, the multi-protocol switching module stores the first packet in a built-in cache, stores the control information in a corresponding queue based on the destination MIFM module that is of the first packet and that is indicated by the control information, then schedules the control information from the queue, reads the first packet from the cache, and switches the first packet and the control information to the corresponding destination MIFM module together.

For example, when the first packet is a standard CXL packet, the MFS module works in a standard CXL mode, to forward the first packet.

Step 5: The egress processing module receives the first packet and the control information from the multi-protocol switching module, and sends the first packet to the connected destination MIFM module based on the control information.

Specifically, operations performed by the EP module on the first packet include data parsing, table lookup, encapsulation, editing, distribution, and the like.

For example, when the first packet is a standard CXL packet, the EP module works in a standard CXL mode, to process the first packet.

In a possible implementation, the EP module switches a working mode based on received packets and control information, to process packets of different protocols, and is further connected to a plurality of MIFM modules, and forwards a packet to a corresponding destination MIFM module based on control information from the MFS module.

Step 6: The destination MIFM module receives the first packet and the control information, and sends the data stream to the outside through the Serdes.

Specifically, processing performed by the MIFM module on the first packet includes processing such as segmentation and encoding.

For example, the destination MIFM module works in a standard CXL mode, and is connected to an SSD pool. The ToR switch completes data switching between the server and the SSD pool.

According to the foregoing processing procedure, the ToR switch completes processing of a data stream from a server or a resource pool in the cabinet, and forwards the data stream to another server or another resource pool in the cabinet.

Further, the ToR switch may be further connected to a network interface card module, and the network interface card module implements multi-protocol conversion on a packet. For example, the network interface card module is connected to at least two MIFM modules of the ToR switch, including a first MIFM module that works in a standard Ethernet mode and a second MIFM module that works in a standard CXL mode. When the ToR switch switches data with a spine switch outside the cabinet by using a standard Ethernet packet, and the ToR switch switches data with the server in the cabinet by using a standard CXL packet, the network interface card module may convert a standard Ethernet packet from the spine switch outside the cabinet into a standard CXL packet, and forward the standard CXL packet to the server.

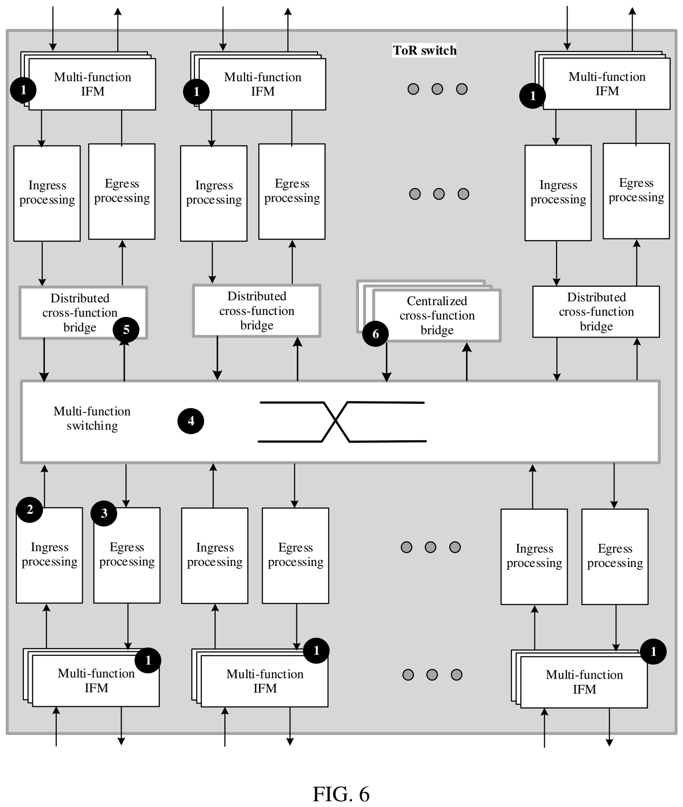

FIG. 6 provides an architecture of another ToR switch. Similar to the switch architecture in FIG. 4, the switch architecture in FIG. 6 also includes a multi-function interface module, an ingress processing module, an egress processing module, and a multi-protocol switching module. In addition, a multi-protocol conversion module is added to implement processing of the ToR switch on packets based on a plurality of protocols. In the switch architecture in FIG. 6, the multi-function interface module, the ingress processing module, and the egress processing module support only one of the plurality of protocols, and this is not changed after configuration is completed. The multi-protocol switching unit supports switching of the plurality of protocols. The plurality of protocols include but are not limited to a standard Ethernet protocol, a standard CXL protocol, a standard UB protocol, or another bus protocol.

The newly added multi-protocol conversion (Cross-Function Bridge, CFB) module is configured to convert a packet that is based on a first protocol into a packet that is based on a second protocol, to implement communication between different bus data transmission through only one ToR switch, specifically including processing such as data buffering, protocol parsing, protocol conversion, out-of-order rearrangement, segmentation and reassembly, data check, and data retransmission.

The multi-protocol conversion module is integrated into the switch to implement conversion between intra-cabinet protocols and inter-cabinet different protocols, and a multi-protocol conversion module does not need to be deployed on each server. This reduces system costs and power consumption. In addition, a new networking manner in the cabinet can be updated through the switch, so that the server can access a plurality of pooled resources in the cabinet by using only one bus protocol, including but not limited to a memory, a hard disk, and an accelerator. This further reduces system interconnection costs and power consumption.

In an implementation, the multi-protocol conversion module is connected to the ingress processing module and/or the egress processing module. The multi-protocol conversion module may be referred to as a distributed multi-protocol conversion module (Distributed Cross-Function Bridge, DCFB). Optionally, each distributed multi-protocol conversion module is connected to one ingress processing module and one egress processing module. That is, there are N groups of ingress processing modules and egress processing modules, and correspondingly, N distributed multi-protocol conversion modules need to be configured. Optionally, at least one distributed multi-protocol conversion module may be configured for the N groups of ingress processing modules and egress processing modules based on a preconfiguration. The DCFB module supports conversion of packets of a plurality of protocols at the same time.

Optionally, each DCFB module is connected in series between an MIFM module and a group of an IP module and an EP module. In a possible implementation, the MIFM module connected to the DCFB module works in a first protocol, and the group of the IP module and the EP module connected to the DCFB module works in a second protocol. For a packet that is received from the MIFM module and that is based on the first protocol, the DCFB module first completes protocol conversion, and then sends a packet based on the second protocol to the IP module for forwarding-related processing. Correspondingly, the DCFB module may further receive a packet from the EP module, and send a packet to the MIFM module after completing protocol conversion.

Optionally, each DCFB module is connected in series between a group of an IP module and an EP module and an MFS module. A packet sent by the IP module to the MFS module is sent to the MFS module after protocol conversion by the DCFB module. A packet sent by the MFS module to the EP module is sent to the EP module after protocol conversion by the DCFB module.

Optionally, each MIMF module is connected to a group of an IP module and an EP module, and the IP module and the EP module are connected to a corresponding DCFB module.

For example, the DCFB module may include the following several types: a network interface card (network interface card, NIC), a smart network interface card (smart network interface card, Smart NIC), a DPU (Data Processing Unit), or the like. When the IP module or the EP module is connected to a plurality of servers, preferably, the DCFB module supports a multi-host (Multi-Host) mode, and can be shared by the plurality of servers.

In an implementation, the multi-protocol conversion module is connected to only the MFS module, and the multi-protocol conversion module may be referred to as a centralized multi-protocol conversion module (Centralized Cross-Function Bridge, CCFB).

After a packet is sent to the MFS module through the IP module, the MFS module sends the packet on which protocol conversion needs to be performed to the CCFB module. After completing protocol conversion of the packet, the CCFB module sends the packet back to the MFS module. Finally, the MFS module switches the packet to a destination MIMF.

For example, the CCFB module may include the following several types: a macro NIC, a macro SmartNiC, and a macro DPU. When the IP module or the EP module is connected to a plurality of servers, preferably, the CCFB module supports a multi-host (Multi-Host) mode, and can be shared by the plurality of servers.

Optionally, both the DCFB module and the CCFB module may be configured to implement conversion between multi-protocol packets. Specifically, packets of different interface modules may be configured to be processed by the DCFB module or the CCFB module based on different service requirements. For example, the DCFB module is configured to perform packet conversion of a simple service with a large bandwidth, and the CCFB module is configured to perform packet conversion of a complex service.

A ToR switch configured with a DCFB module is used as an example. The DCFB module is configured to be connected between an MFS module and a group of an IP module and an EP module. In this case, a packet processing procedure of the ToR switch is as follows.

Step 1: Receive a data stream through a serializing/deserializing circuitry (serializing/deserializing circuitry, SerDes).

Step 2: An MIFM module implements processing such as decoding, error correction, framing, error check, and retransmission on the data stream, generates a first packet, and sends the first packet.

Step 301: The IP module performs processing such as packet parsing, table lookup, forwarding, and editing on the received first packet, determines, based on a prestored routing table, a destination MIFM module corresponding to the received packet, and sends the first packet and control information.

Step 302: The DCFB module determines, based on a preconfiguration, that protocol conversion needs to be performed on the first packet, converts the first packet based on a first protocol into a second packet based on a second protocol, and sends the second packet to a multi-protocol switching module.

Step 4: The MFS module receives the second packet and the control information, and switches the packet to a corresponding destination MIFM module based on the control information.

Step 5: An egress processing module receives the second packet, performs operations such as data parsing, table lookup, encapsulation, editing, and distribution, and sends the first packet to the connected destination MIFM module.

In a possible implementation, the egress processing module is connected to a plurality of MIFM modules, and the egress processing module forwards the first packet to the destination MIFM module based on control information sent by the multi-protocol switching module.

Step 6: The destination MIFM module receives the packet, completes processing such as segmentation and encoding, and then sends the recovered data stream to the outside through the Serdes.

Optionally, the DCFB module may alternatively be configured between the MIFM module and a group of an IP module and an EP module.

Optionally, the multi-protocol conversion module may alternatively be a CCFB module, and the CCFB module is connected to the MFS module. After receiving a packet, the MFS module first sends all received packets to the CCFB module, or sends some packets to the CFB module based on a configuration. The CCFB module receives the packet from the MFS module, and sends a converted packet back to the MFS module after completing protocol conversion.

In an implementation, the IP module and the EP module may be configured to be in a single-protocol mode, and a single protocol supported by the IP module and a single protocol supported by the EP module include but are not limited to one of a standard Ethernet protocol, a standard CXL protocol, a standard UB protocol, or another bus protocol. A protocol mode supported by the IP module and a protocol mode supported by the EP module should be configured based on a location of the DCFB module, the MIFM module, and a type of an external resource connected to the MIFM module.

For example, the MIFM module is connected to an SSD pool that supports the standard CXL protocol. When the DCFB module is configured between the MIFM module and the IP module or the EP module, the IP module or the EP module may be configured to support the standard Ethernet protocol, and the DCFB module converts a packet from a packet based on the standard Ethernet protocol to a packet based on the standard CXL protocol, to implement packet forwarding.

For example, the MIFM module is connected to an SSD pool that supports the standard CXL protocol. When the DCFB module is configured between the MFS module and the IP module or the EP module, the IP module or the EP module may be configured to support the standard CXL protocol, to prevent a packet forwarding failure caused by a mismatch between a protocol configured for the IP module or the EP module and a protocol for the connected MIFM module.

According to the foregoing processing procedure, the ToR switch completes processing of a data stream from a server or a resource pool in the cabinet, and forwards the data stream to another server or another resource pool in the cabinet.

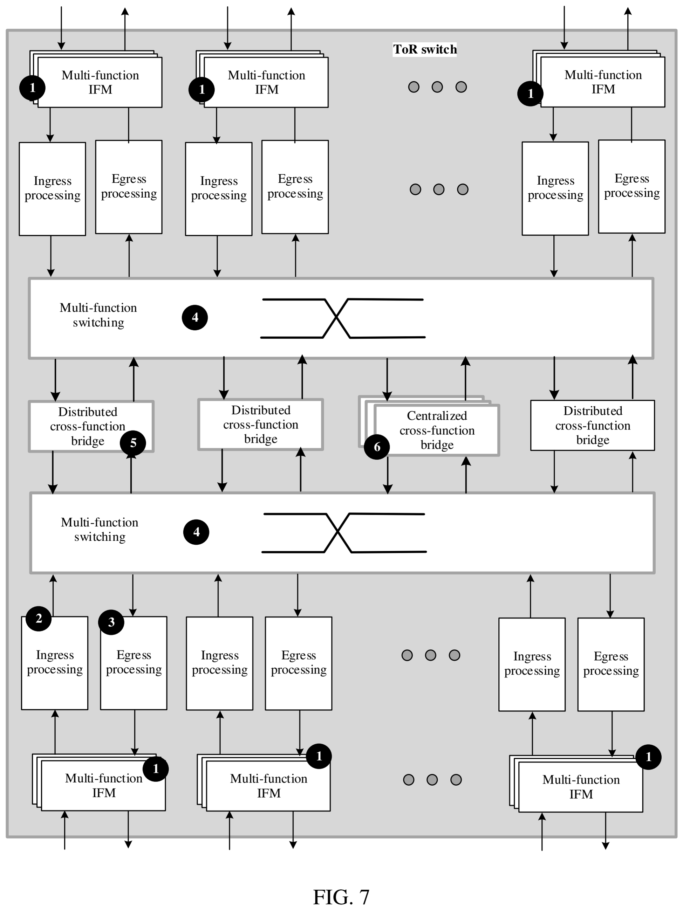

FIG. 7 provides an architecture of another ToR switch. In the switch architecture, not only the MIFM module, the IP module, the EP module, the MFS module, and the multi-protocol conversion module exist, but also another MFS module exists. In the architecture, the multi-protocol conversion module is disposed between the two MFS modules, so that protocol conversion is implemented on a packet between two times of switching performed by the two MFS modules, and the ToR switch can support switching of a multi-protocol packet. In this architecture, the modules (except the multi-protocol conversion module) can support only one type of protocol switching. This reduces requirements on components of the modules and reduces costs.

In an implementation, the multi-protocol conversion module may be at least one DCFB module, and the DCFB module is disposed between the two MFS modules in parallel. The DCFB module receives a packet from an MFS module on either side, and sends the packet to an MFS module on the other side after completing protocol conversion. A quantity of disposed DCFB modules may be determined based on a total service quantity or a total interface quantity.

In another implementation, the multi-protocol conversion module may be at least one CCFB module. When there are a plurality of CCFB modules, the CCFB modules are disposed between the two MFS modules in parallel. The CCFB module receives a packet from an MFS module on any side, and sends the packet to another MFS module after completing protocol conversion. A quantity of disposed CCFB modules may be determined based on a total service quantity or a total interface quantity.

A packet processing procedure of the ToR switch is as follows.

Step 1: Receive a data stream through a serializing/deserializing circuitry (serializing/deserializing circuitry, SerDes).

Step 2: A multi-function interface MIFM module implements processing such as decoding, error correction, framing, error check, and retransmission on the data stream, generates a first packet, and sends the first packet to an ingress processing module.

Step 3: The IP module performs processing such as packet parsing, table lookup, forwarding, and editing on the first packet, determines, based on a prestored routing table, a destination MIFM module corresponding to the first packet, and sends the first packet and control information to a first MFS module.

In a possible implementation, the ingress processing module is connected to a plurality of MIFM modules.

Step 4: After receiving the first packet and the control information, the first MFS module determines a switching path, and sends the first packet and the control information to a multi-protocol conversion module corresponding to the switching path.

The first MFS module works in a first protocol corresponding to the first packet.

Step 5: The multi-protocol conversion module converts the first packet based on the first protocol into a second packet based on a second protocol, and sends the second packet to a second MFS module.

Step 6: The second MFS module switches the second packet to a corresponding destination MIFM module based on the control information.

The second MFS module works in the second protocol corresponding to the second packet.

Step 7: The egress processing module receives the second packet from a multi-protocol switching module, performs operations such as data parsing, table lookup, encapsulation, editing, and distribution, and sends the second packet to the connected destination MIFM module.

Step 8: The destination MIFM module receives the second packet, completes processing such as segmentation and encoding, and then sends the recovered data stream to the outside through the Serdes.

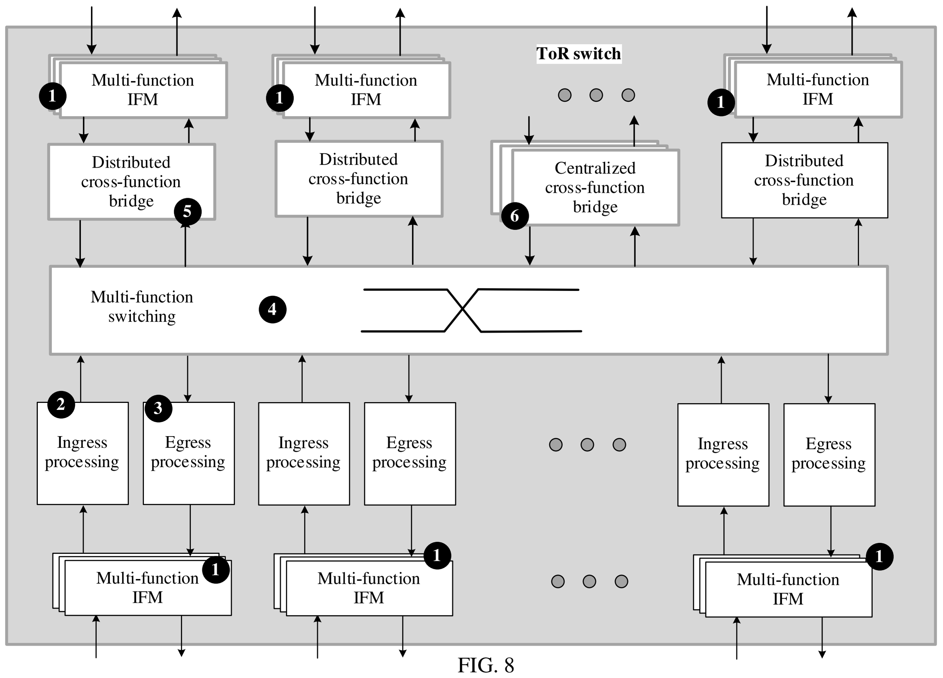

FIG. 8 provides an architecture of another ToR switch. In the switch architecture, functions of an IP module and an EP module are combined into a multi-protocol switching module. Therefore, in addition to implementing inter-protocol conversion, the multi-protocol switching module needs to implement processing, including but not limited to processing such as data aggregation, parsing, table lookup, route selection, editing and forwarding, on an uplink packet. In addition, the multi-protocol switching module needs to implement processing, including but not limited to processing such as data parsing, table lookup, encapsulation, editing, and distribution, on a downlink packet. In the architecture, the MFS module supports only one protocol switching. Therefore, requirements on components of the MFS module can be reduced, and costs and component requirements of the switch can be reduced.

Optionally, all functions of the IP module and the EP module are integrated into at least one multi-protocol switching module, that is, each MIFM module is connected to a corresponding MFS module. Alternatively, some functions of the IP module and the EP module are integrated into at least one multi-protocol switching module, so that some MIFM modules are connected to corresponding MFS modules, and remaining MIFM modules are respectively connected to corresponding IP modules and EP modules. For example, the some MIFM modules may be MIFM modules connected to all servers in a cabinet.

In an implementation, the at least one multi-protocol conversion module may be a DCFB module, and the DCFB module is disposed between two MFS modules in parallel. The DCFB module receives a packet from an MFS module on either side, and sends the packet to an MFS module on the other side after completing protocol conversion. A quantity of disposed DCFB modules may be determined based on a total service quantity or a total interface quantity.

In another implementation, the multi-protocol conversion module may alternatively be at least one CCFB module. When there are a plurality of CCFB modules, the CCFB modules are disposed between the two MFS modules in parallel. The CCFB module receives a packet from an MFS module on any side, and sends the packet back to the MFS module after completing protocol conversion. A quantity of disposed CCFB modules may be determined based on a total service quantity or a total interface quantity.

For example, for a ToR switch in which a DCFB module is configured for only an MIFM module connected to a server, a packet processing procedure is as follows.

Step 1: Receive a data stream from the server through a serializing/deserializing circuitry (serializing/deserializing circuitry, SerDes), where the data stream is a data stream based on a first protocol, and the first protocol is one of a plurality of protocols supported by the multi-function interface module and the multi-protocol switching module in the ToR switch.

Step 2: The multi-function interface MIFM module implements processing such as decoding, error correction, framing, error check, and retransmission on the data stream, generates a first packet, and sends the first packet to the DCFB module.

Step 3: The DCFB module performs processing such as packet parsing, table lookup, forwarding, and editing on the first packet, and when determining that protocol conversion is required, converts the first packet based on a first protocol into a second packet based on a second protocol, and sends the second packet and control information to an MFS module.

Step 4: The MFS module receives the second packet and the control information, and switches the second packet to a corresponding destination MIFM module.

Step 5: The DCFB module corresponding to the destination MIFM module receives the second packet from the multi-protocol switching module, performs operations such as data parsing, table lookup, encapsulation, editing, and distribution, and sends the second packet to the connected destination MIFM module.

Step 6: The destination MIFM module receives the second packet, completes processing such as segmentation and encoding, and then sends the recovered data stream to the outside through the Serdes.

In some embodiments, the switch may be disposed in a chassis or a cabinet of a disaggregated data center (Disaggregated Data Center) network, to internally provide a bus interface like a CXL/UB interface and interconnect all servers (namely, CPUs) and various pooled resources (accelerators, memories, storage, network interface cards, and the like) for mutual communication, and externally provide a standard Ethernet interface to connect to a spine switch, to establish a large-scale data center network.

## Claims

1. A switch, wherein the switch comprises at least two interface modules, a switching module, and an ingress processing module, wherein
the at least two interface modules comprise a first interface and a second interface, the first interface is configured to: send and receive a first packet, wherein the first packet is a packet based on a first protocol, and the second interface is configured to: send and receive a second packet, wherein the second packet is a packet based on a second protocol;
the interface module is configured to obtain a to-be-forwarded packet, wherein the to-be-forwarded packet is one of the first packet and the second packet;
the ingress processing module is configured to: receive the to-be-forwarded packet from the interface module, and obtain first indication information corresponding to the to-be-forwarded packet, wherein the first indication information indicates a destination interface corresponding to the to-be-forwarded packet; and
the switching module is configured to: receive the to-be-forwarded packet and the first indication information from the ingress processing module, and send the to-be-forwarded packet to the destination interface based on the first indication information.

2. The switch according to claim 1, wherein the switch further comprises an egress processing module, and the egress processing module is configured to:
receive the to-be-forwarded packet and the first indication information from the switching module; and
send the to-be-forwarded packet to the interface module, wherein the interface module comprises the destination interface.

3. The switch according to claim 1, wherein the ingress processing module is configured to connect to at least two interfaces, and the at least two interfaces comprise the first interface and the second interface.

4. The switch according to claim 2, wherein the egress processing module is configured to connect to at least two interfaces, and the at least two interfaces comprise the first interface and the second interface.

5. A switch, wherein the switch comprises at least two interface modules, a first switching module, an ingress processing module, and a multi-protocol conversion module, wherein
the at least two interface modules comprise a first interface and a second interface, the first interface is configured to: send and receive a first packet, wherein the first packet is a packet based on a first protocol, and the second interface is configured to: send and receive a second packet, wherein the second packet is a packet based on a second protocol;
the interface module is configured to obtain a to-be-forwarded packet, wherein the to-be-forwarded packet is one of the first packet and the second packet;
the multi-protocol conversion module is configured to: receive the to-be-forwarded packet, and convert the to-be-forwarded packet into a third packet based on a configuration, wherein the third packet and the to-be-forwarded packet are packets based on different protocols; and
the first switching module is configured to: receive the third packet and corresponding indication information, and send the received third packet to a destination interface based on the indication information, wherein
the indication information is generated by the ingress processing module, and the ingress processing module is configured to obtain the indication information corresponding to the received packet, wherein the indication information indicates the destination interface corresponding to the received packet.

6. The switch according to claim 5, wherein the interface module is connected to the ingress processing module, and the ingress processing module is connected to the multi-protocol conversion module.

7. The switch according to claim 5, wherein the interface module is connected to the multi-protocol conversion module, and the multi-protocol conversion module is connected to the ingress processing module.

8. The switch according to claim 5, wherein the switch further comprises a second switching module, the interface module is connected to the ingress processing module, the ingress processing module is connected to the second switching module, and the second switching module is connected to the multi-protocol conversion module.

9. The switch according to any one of claims 5 to 8, wherein the switch further comprises an egress processing module, and the egress processing module is configured to:
receive the to-be-forwarded packet and the first indication information from the switching module; and
send the to-be-forwarded packet to the interface module, wherein the interface module comprises the destination interface.

10. A switch cabinet, comprising the switch according to any one of claims 1 to 4, at least one server electrically connected to the switch, and at least one resource pool electrically connected to the switch, wherein the resource pool comprises at least one of a plurality of memory resources, a plurality of hard disk resources, and a plurality of accelerator resources.

11. The switch cabinet according to claim 10, wherein the switch cabinet further comprises a multi-protocol conversion apparatus, and the multi-protocol conversion apparatus is electrically connected to the switch.

12. A switch cabinet, comprising the switch according to any one of claims 5 to 9, at least one server electrically connected to the switch, and at least one resource pool electrically connected to the switch, wherein the resource pool comprises at least one of a plurality of memory resources, a plurality of hard disk resources, and a plurality of accelerator resources.
